Europäisches Patentamt

European Patent Office

Office européen des brevets

(11) Publication number: **0 400 237 A1**

# EUROPEAN PATENT APPLICATION

(21) Application number: **89305543.4**

(22) Date of filing: **01.06.89**

(51) Int. Cl.⁵: **E02B 3/26**

(43) Date of publication of application:
**05.12.90 Bulletin 90/49**

(84) Designated Contracting States:
**BE ES FR GB SE**

(71) Applicant: **Bridgestone Corporation**
**10-1, Kyobashi 1-Chome Chuo-Ku**
**Tokyo 104(JP)**

(72) Inventor: **Kajigaya, Shinichi**
**7-26, Konan 1-chome Konan-Ku**
**Yokohoma City Kanagawa Pref(JP)**

(74) Representative: **Whalley, Kevin et al**
**MARKS & CLERK 57/60 Lincoln's Inn Fields**
**London WC2A 3LS(GB)**

(54) **Support member for marine fender.**

(57) A support member (3) for a marine fender is a substantially plate-like body attached at its one end to a surface (1a) of a berthing equipment (1) and at the other end to a rear surface (2a) of a shock receiving plate (2). In this case, at least one surface (3a) in thickness direction of said plate-like body (2) facing the berthing equipment (1) and the shock receiving plate (2) is bent between the surface (1a) of the berthing equipment and the surface (2a) of the shock receiving plate so as to enlarge in an outward direction.

FIG. 1

# SUPPORT MEMBER FOR MARINE FENDER

This invention relates to support members for a marine fender, and more particularly to a substantially plate-like support member attached at its one end to a surface of quay wall or other berthing equipment and at the other end to a rear surface of a shock receiving plate so as to absorb a berthing shock acting to the shock receiving plate through elastic deformation of the support member itself and always developing a stable shock absorbing function irrespective of the acting direction of the berthing shock.

As this type of the support member for the marine fender, for example, Japanese Utility Model Publication No. 49-34319 discloses a support member composed mainly of rubber or rubbery elastic material and used as a pair in the marine fender.

This support member is comprised of a plate-like body having a parallelogram in section cut in the lateral direction, and attached at the bottom surface to a surface of a berthing equipment and at the top surface to a rear surface of a shock receiving plate. In this case, the two support members are arranged at such an opposite posture that the distance between the support members is gradually enlarged from the shock receiving plate toward the berthing equipment.

According to the marine fender of the above structure, the berthing shock acting to the shock receiving plate is effectively absorbed by deforming each of the support members into a substantially S-shaped form.

In such a conventional technique, however, the sectional form of the support member is a parallelogram, so that there is no guide portion for inducing the S-shaped deformation of the support member. Apart from a case that the berthing shock acts to the shock receiving plate in a direction perpendicular to the plate, a greater part of the berthing shock has a component of force in a direction along the surface of the shock receiving plate. In the latter case, it is substantially impossible to always create the S-shaped deformation of the support member. In fact, the support member shows different deformation behaviors every the berthing shock, so that there is caused a problem of largely changing the shock absorbing function of the support member.

It is, therefore, an object of the invention to advantageously solve the aforementioned problems of the conventional technique and to provide a support member for marine fender capable of always developing the stable shock absorbing function irrespective of various berthing shocks.

According to the invention, there is the provision of a support member for marine fender comprised of a substantially plate-like body and attached at its one end to a surface of a berthing equipment and at the other end to a rear surface of a shock receiving plate for marine fender so as to slantly locate between both surfaces substantially in parallel with each other, characterized in that at least one surface in thickness direction of said plate-like body facing said berthing equipment and said shock receiving plate is bent between the surface of said berthing equipment and the surface of said shock receiving plate so as to enlarge in an outward direction.

In the preferred embodiments of the invention, an enlarging angle $\alpha$ at the bent surface of the support member is $180° > \alpha \geq 150°$, and a bent position is set to a distance of 0.2~0.35H from the fitting surface of the support member based on a distance H between the surfaces of the berthing equipment and the shock receiving plate.

In the support member according to the invention, when the berthing shock is applied to the shock receiving plate, the bent portion of the support member serves as a guide portion of inducing the deformation of the support member, and consequently the behavior of the bending deformation becomes approximately constant irrespective of the acting direction of the berthing shock, whereby the stable shock absorbing function can always be developed.

The invention will be described with reference to the accompanying drawings, wherein:

Figs. 1 to 3 are lateral section views of various embodiments of the support member according to the invention, respectively; and

Figs. 4 and 5 are schematic views showing various deformation states of the support member, respectively.

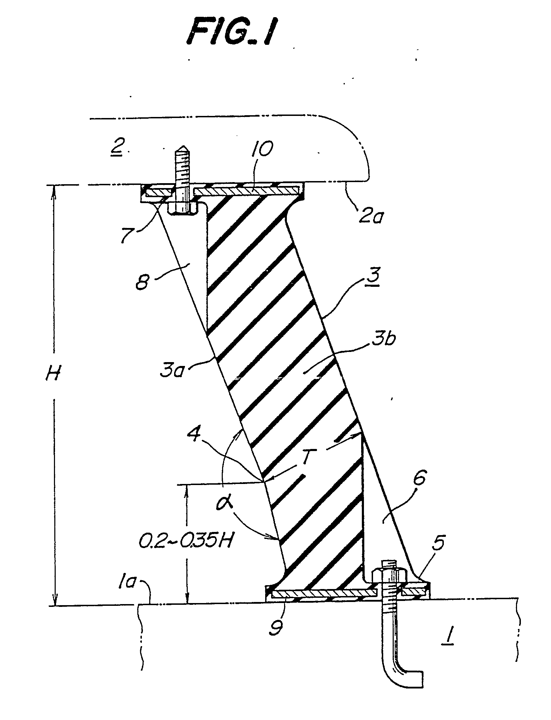

In Fig. 1 is shown a lateral section of a first embodiment of the support member according to the invention, wherein numeral 1 is a quay wall as an example of the berthing equipment, numeral 2 a shock receiving plate for a marine fender, and numeral 3 a support member for the marine fender comprised of a plate-like body as a whole and extending in up and down directions of the quay wall 1.

The two support members 3 are usually used as a pair in the marine fender. In this case, the two support members 3 are arranged at such an opposite posture (not clearly shown) that the distance between the support members is gradually enlarged toward the quay wall by attaching the support member 3 at its one end to a surface 1 a of the quay wall 1 and at the other end to a rear surface 2a of the shock receiving plate 2 so as to incline the support member 3 with respect to the surfaces 1a and 2a substantially in parallel with each other.

In the illustrated support member 3, the surface 3a of the support member 3 facing the quay wall 1 is bent between the surface 1a of the quay wall 1 and the rear surface 2a of the shock receiving plate 2, preferably at a position 4 from the quay wall surface 1a to a range of 0.2~0.35H of the distance H between both the surfaces 1a and 2a to enlarge at an angle $\alpha$ toward the quay wall surface. Preferably, the enlarged angle $\alpha$ is $180°>\alpha\geqq150°$, and a minimum thickness T of the support member at the bent position 4 is 0.2~0.3H.

The reason why the bent position 4 of the surface 3a is a range of 0.2~0.35H from the quay wall surface 1a and the enlarged angle $\alpha$ at the bent position 4 is $180°>\alpha\geqq150°$ and the minimum thickness T at the bent position 4 is 0.2.~0.3H is due to the fact that when these requirements are within the above ranges, the deformation form of the support member 3 is always rendered into S-shaped form irrespective of the acting direction of the berthing shock to develop the stable shock absorbing function.

Moreover, a fitting portion 5 of the support member 3 to the quay wall 1 is formed in a depression 6 adjoining to the quay wall 1 and disposed in the support member 3 from a side of the surface facing the shock receiving plate 2, while a fitting portion 7 of the support member 3 to the shock receiving plate 2 is formed in a depression 8 adjoining to the shock receiving plate 2 and disposed in the support member 3 from a side of the surface facing the quay wall 1. In each of these fitting portions 5, 7 is embedded each of reinforcing plates 9, 10 made from a rigid material and extending from the fitting portion 5, 7 of the support member 3 to a main body 3b thereof in parallel to the quay wall surface 1a and the rear surface 2a of the shock receiving plate 2, whereby the load supporting ability of the fitting portion 5, 7 is further ensured.

Each of the depressions 6, 8 for the formation of the fitting portions 5, 7 may be formed from a side of a surface opposite to the above surface. If necessary, sectional profile of the depression 6, 8 may be variously changed as far as the fitting surfaces of the fitting portions 5, 7 are in parallel to the quay wall surface 1a and the rear surface 2a of the shock receiving plate 2.

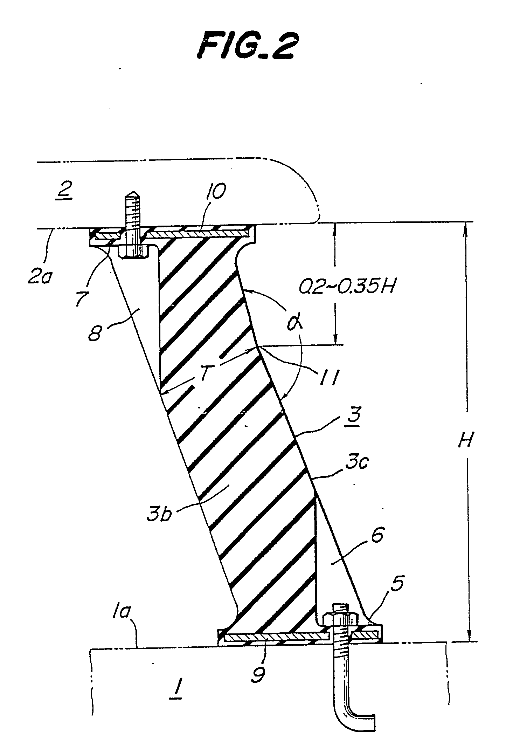

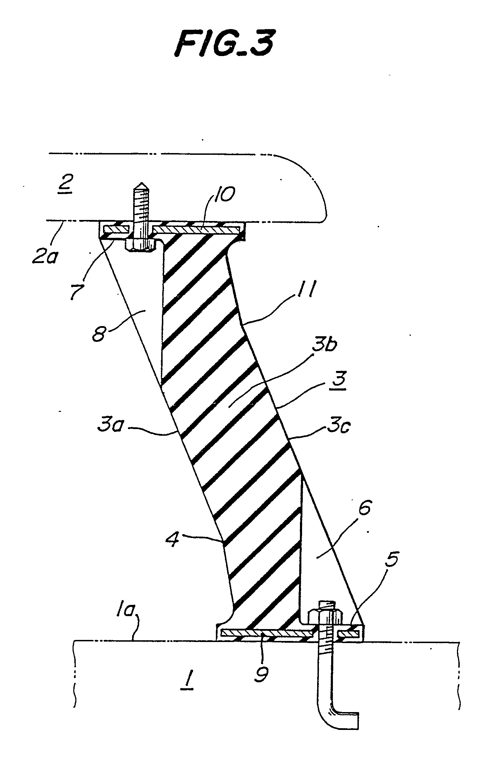

Figs. 2 and 3 show lateral sections of second and third embodiments of the support member according to the invention, respectively. In the second embodiment of Fig. 2, the surface 3c of the support member 3 facing the shock receiving plate 2 is bent at a position 11 from the rear surface 2a of the shock receiving plate 2 to a range of 0.2~0.35H of the distance H between both the surfaces 1a and 2a to enlarge at an angle $\alpha$ toward the side of the shock receiving plate 2 in the same manner as in the surface 3a of the first embodiment. In this case, the enlarged angle $\alpha$ is $180°>\alpha\geqq150°$, and a minimum thickness T of the support member at the bent position 11 is 0.2.~0.3H.

The third embodiment of Fig. 3 is a combination of the embodiment of Fig. 1 and the embodiment of Fig. 2, wherein the surfaces 3a and 3c of the support member 3 facing the quay wall 1 and the shock receiving plate 2 are bent in the same manner as in the above embodiments.

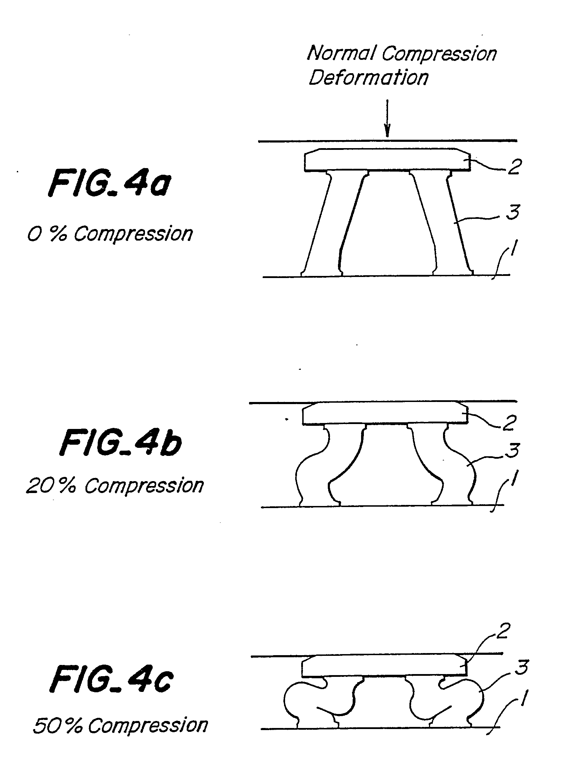

When the berthing shock is applied to the shock receiving plate 2 in a direction perpendicular to the surface thereof, as shown in Fig. 4, each of the illustrated support members 3 is elastically deformed based on the induction of bending deformation at the bent position being a thinnest thickness to always show S-shaped deformation behavior, so that it can exhibit a very stable shock absorbing function against the berthing shock.

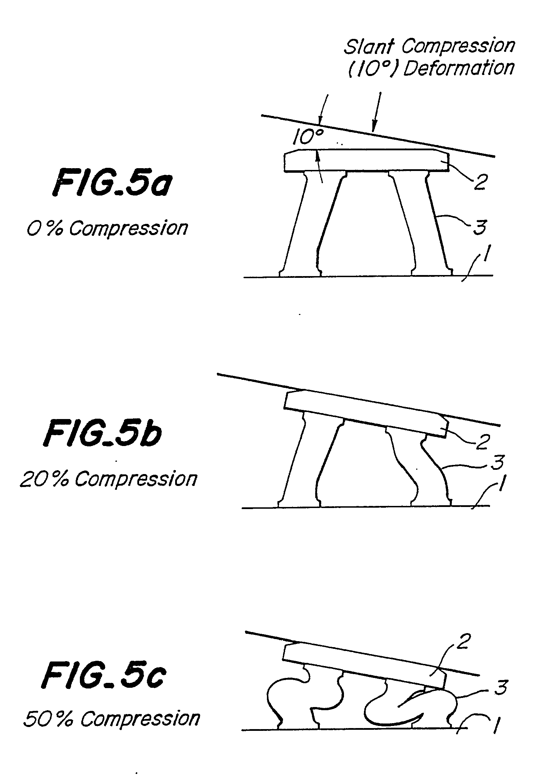

Further, similar result is obtained even when the berthing shock has a component of force in a direction along the surface of the shock receiving plate 2. In the latter case, each of the support members 3 is always subjected to a substantially S-shaped elastic deformation under the action of deformation induction at the bent position as shown in Fig. 5, whereby the sufficiently stable shock absorbing function can be developed.

As mentioned above, according to the invention, at least one surface of the support member facing the berthing equipment and the shock receiving plate is bent to enlarge in an outward direction, whereby the deformation behavior of the support member can be made substantially constant irrespective of the acting direction of the berthing shock to always develop the stable shock absorbing function, and also the durability of the support member can effectively be improved.

## Claims

1. A support member for marine fender comprised of a substantially plate-like body and attached at its one end to a surface of a berthing equipment and at the other end to a rear surface of a shock receiving plate for marine fender so as to slantly locate between both surfaces substantially in parallel with each other, characterized in that at least one surface in thickness direction of said plate-like body facing said berthing equipment and said shock receiving plate is bent between the surface of said berthing equipment and the surface of said shock receiving plate so as to enlarge in an outward direction.

2. The support member according to claim 1, wherein an enlarging angle $\alpha$ at the bent surface of the support member is $180° > \alpha \geqq 150°$.

3. The support member according to claim 1, wherein a bent position is set to a distance of 0.2~0.35H from the fitting surface of the support member based on a distance H between the surfaces of the berthing equipment and the shock receiving plate.

# FIG.1

# FIG.2

# FIG.3

Normal Compression
Deformation

## FIG. 4a

0 % Compression

2

3

1

## FIG. 4b

20% Compression

2

3

1

## FIG. 4c

50% Compression

2

3

1

**FIG.5a**

0 % Compression

**FIG.5b**

20 % Compression

**FIG.5c**

50 % Compression

Slant Compression
(10°) Deformation

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 032 050 (SUMITOMO RUBBER) <br> * fig 4; pag 5 1. 41-57; pag 5 1 78-95 * | 1-3 | E 02 B    3/26 |
| X | FR-A-2 523 611 (SUMITOMO RUBBER) <br> * fig 6 * | 1 | |
| A | FR-A-2 441 683 (BRIDGESTONE TIRE COMPANY) | | |
| A | FR-A-2 492 930 (BRIDGESTONE TIRE COMPANY) | | |

TECHNICAL FIELDS
SEARCHED (Int. Cl.5)

E 02 B

The present search report has been drawn up for all claims

| Place of search | Date of completion of the search | Examiner |
|---|---|---|
| THE HAGUE | 23-01-1990 | HANNAART J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document